# EUROPÄISCHE PATENTSCHRIFT

(11) **EP 1 530 894 B1**
(45) Veröffentlichungstag und Bekanntmachung des Hinweises auf die Patenterteilung: **09.08.2006**
(21) Anmeldenummer: 04026549.8
(22) Anmeldetag: 09.11.2004
(51) Int. Cl.: A01D 43/10, A01D 43/08

(54) **Verfahren und Vorrichtung zum Ein/Ausbau einer Konditioniereinrichtung in eine landwirtschaftliche Erntemaschine**
Process and device for mounting and removing a conditioning device in an agricultural machine
Procédé et dispositif pour le montage et le démontage d'un dispositif conditionneur dans une machine agricole

(30) Priorität: 11.11.2003 DE 20317360 U
(43) Veröffentlichungstag der Anmeldung: 18.05.2005
(73) Patentinhaber: Maschinenfabrik Bernard Krone GmbH, 48480 Spelle (DE)
(72) Erfinder: Krone, Bernard, Dr.-Ing. E.h., 48480 Spelle (DE); Horstmann, Josef, Dr.-Ing., 49479 Ibbenbüren (DE)

(56) Entgegenhaltungen:
- DE-A1- 3 330 195
- DE-A1- 10 021 657
- DE-A1- 19 638 033
- US-A- 5 863 005
- US-A- 6 125 617

## Beschreibung

Die Erfindung betrifft ein Verfahren zum Ein/Ausbau einer Konditioniervorrichtung in eine landwirtschaftliche Erntemaschine, insbesondere einen selbstfahrenden Feldhäcksler, gemäß dem Oberbegriff des Anspruches 1 und eine Vorrichtung zum Ein/Ausbau einer Konditioniervorrichtung gemäß dem Oberbegriff des Anspruches 5.

Feldhäcksler werden vielfach zum Ernten und gebrauchsfertigen Zerkleinern verschiedenartigen Ernteguts verwendet. So ist es beim Ernten von Mais nach dessen Zerhäckseln notwendig, die Körner aufzubrechen, da sie sonst als Tierfutter unverdaulich sind. Dies geschieht in einer der Häckseleinrichtung nachgeordneten Konditioniereinrichtung, einem sogenannten Cracker, bei dem das Erntegut zwischen Quetschwalzen hindurchgeführt und dabei aufgebrochen wird. Beim Ernten von reinem Grünfutter wie z. B. Gras ist hingegen das nachfolgende Durchlaufen einer Konditioniereinrichtung nach dem Zerhäckseln nicht notwendig und würde das sehr feuchte Erntegut durch die Quetschung sogar schädigen. Deshalb sind derartige Erntemaschinen sowohl mit als auch ohne Konditioniereinrichtung betreibbar.

Die DE 100 21 657 C 2 beschreibt einen Feldhäcksler mit einer Konditioniereinrichtung, die an ihrer einen Seite mit einem verschwenkbaren Kanalabschnitt und an ihrer anderen Seite mit dem starren Bereich des Förderkanals lösbar verbunden ist, wobei der verschwenkbare Kanalabschnitt als Schwenkarm für die Konditioniereinrichtung zusammen mit dem verschwenkbaren Kanalabschnitt dient. Dadurch kann die Konditioniereinrichtung in eine gut zugängliche Ablage- und Austauschposition gebracht werden, in der nach dem Lösen der Verbindung mit dem verschwenkbaren Kanalabschnitt die Konditioniereinrichtung entnommen und gegen einen glatten Kanalabschnitt ausgetauscht werden kann. Obwohl diese Lösung gegenüber anderen bekannten Ausführungen schon recht vorteilhaft ist, so ist doch eine schnellere und von einer Person durchführbare komfortablere Montage wünschenswert.

Aufgabe der Erfindung ist es daher, das Montage- und Demontageverfahren der Konditioniereinrichtung dahingehend zu verbessern, dass es von einer Person ohne große Kraftanstrengung in kürzester Zeit sicher auszuführen ist.

Diese Aufgabe wird erfindungsgemäß durch die Lehre der Ansprüche 1 und 5 gelöst, wobei die Merkmale in den weiteren Ansprüchen die Lösung in vorteilhafter Weise weiterentwickeln. Durch die Zuhilfenahme einer Umlenkvorrichtung für das Zugmittel der für den Umbau notwendigen Hebe- und Senkvorrichtung z.B. einer Winde, wird ermöglicht, dass die Konditioniereinrichtung in einem ersten Verfahrensschritt in einer derartigen Lage zu einer Position angehoben wird, in der sie sehr einfach mit der Maschine gekoppelt werden kann.

Nach diesem ersten Koppelvorgang wird die Umlenkeinrichtung entfernt, so dass in einem zweiten Verbindungsvorgang des Montageablaufs die Konditioniereinrichtung um einen Drehpunkt in den Koppelpunkten mit der Maschine geschwenkt wird und so die Einbaulage erreicht. Diese Montagevorgänge, die für die Montage des glatten Kanalabschnitts ebenso gelten und für die Demontage in umgekehrter Reihenfolge durchgeführt werden, sind durch das erfindungsgemäße Verfahren mit Zuhilfenahme der erfindungsgemäßen Umlenkvorrichtung von einer Person aus sicherer Arbeitsposition sehr leicht und schnell ausführbar.

Eine weitere vorteilhafte Auswirkung der Erfindung gegenüber der bisherigen Ausführung ist die Reduzierung der Kanalabschnittsteile. Der bisher notwendige verschwenkbare Kanalabschnitt kann entfallen, weil durch die Erfindung die Konditioniereinrichtung bzw. der glatte Kanalabschnitt beim ersten Koppelvorgang des Montageablaufs direkt in die Koppelposition gebracht werden können. Weniger Einzelteile bedeutet gleichzeitig weniger Verbindungsstellen, größere Funktionssicherheit und geringere Herstellungskosten.

Weitere Vorteile und Einzelheiten der Erfindung ergeben sich aus der nachfolgenden Beschreibung einer in den Zeichnungen dargestellten bevorzugten Ausführungsform der Erfindung.

Es zeigt:
**Fig. 1** eine Seitenansicht eines Ausführungsbeispieles eines selbstfahrenden Feldhäckslers,
**Fig. 2** eine Seitenansicht auf die schematisch dargestellten Baugruppen Häckseleinrichtung, Konditioniereinrichtung und Auswurfschacht eines Feldhäckslers nach Fig. 1, wobei die Konditioniereinrichtung demontiert ist,
**Fig. 3** eine Seitenansicht nach Fig. 2, mit einer Position der Konditioniereinrichtung nach dem ersten Verfahrensschritt,
**Fig. 4** eine Seitenansicht nach Fig. 2, mit eingebauter Konditioniereinrichtung nach dem zweiten Verfahrensschritt,
**Fig. 5** eine Seitenansicht nach Fig. 4, jedoch mit eingebautem glatten Kanalabschnitt an Stelle der Konditioniereinrichtung.

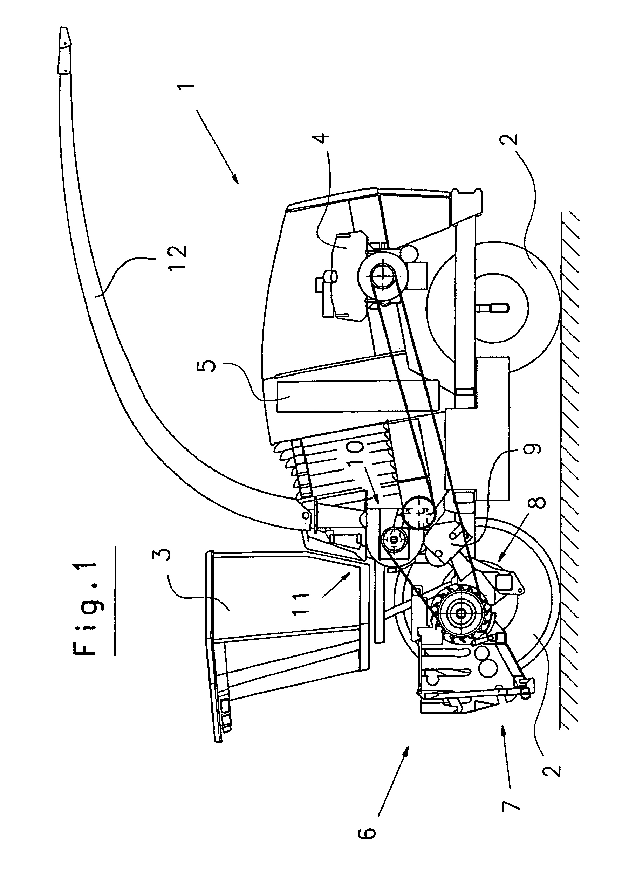

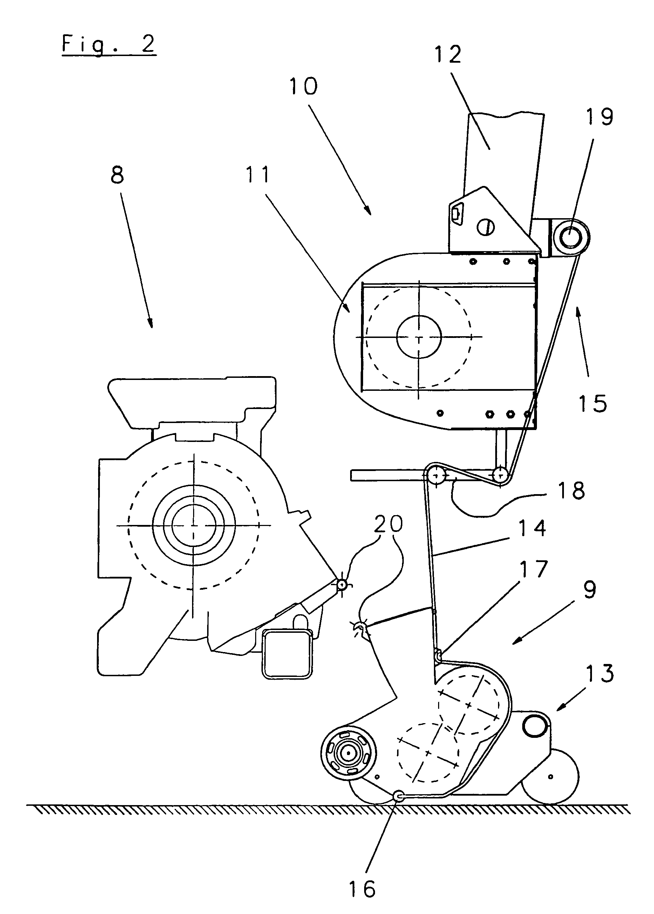

Der in Fig. 1 dargestellte selbstfahrende Feldhäcksler 1 hat Räder 2, eine Kabine 3, einen Antriebsmotor 4 und eine zentrale Kühleinheit 5. Außerdem verfügt er über eine Häckseleinrichtung 6, welche im wesentlichen die Baugruppen Einzug 7, Häckselaggregat 8, Konditioniereinrichtung 9 und Auswurfschacht 10 mit einem darin angeordnetem Nachbeschleuniger 11 und einem an dem Auswurfschacht 10 angrenzenden Auswurfkrümmer 12 umfasst. In den weiteren Darstellungen der Fig. 2 bis 5 sind nur die zur Verdeutlichung der Erfindung notwendigen Baugruppen aus dem Feldhäcksler 1 herausgelöst skizzenhaft dargestellt.

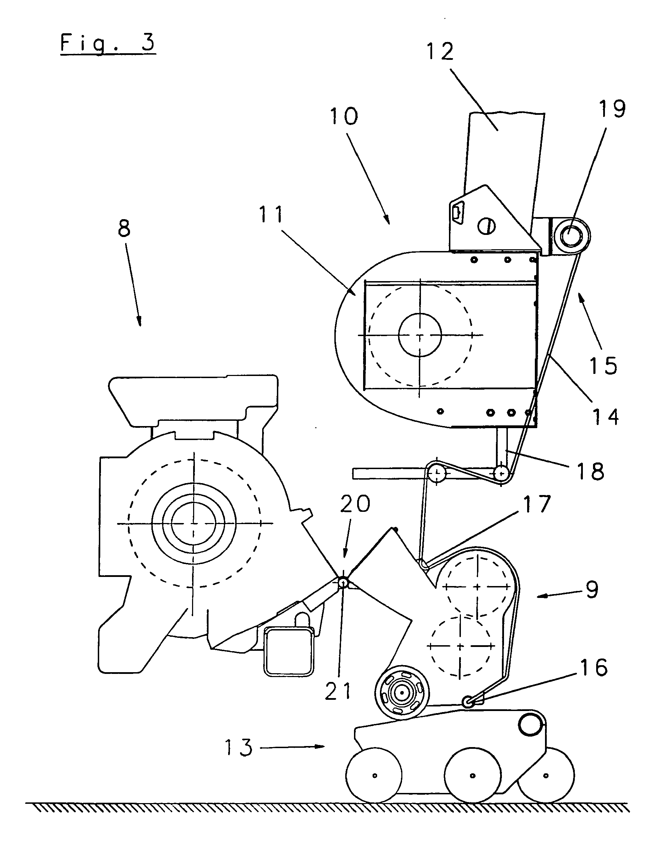

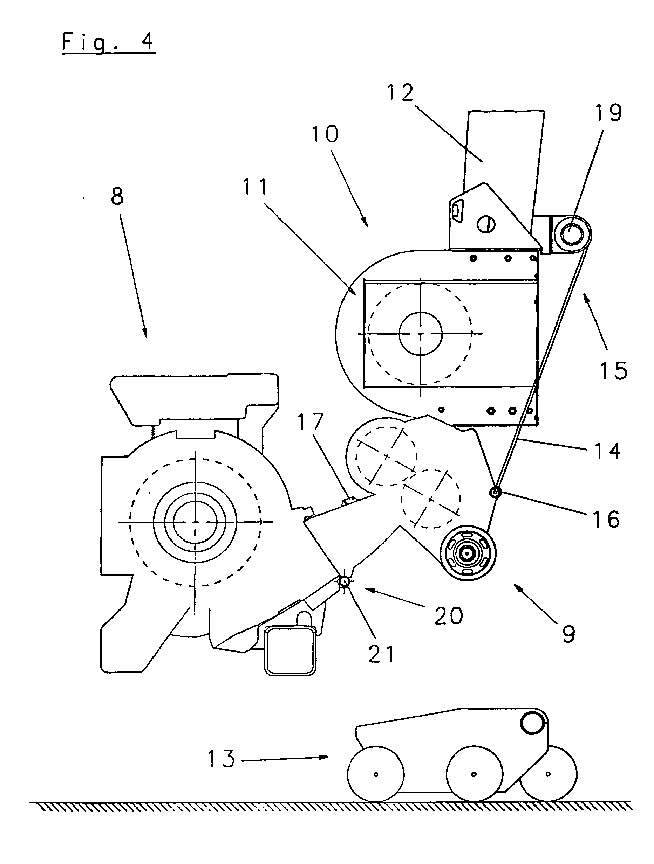

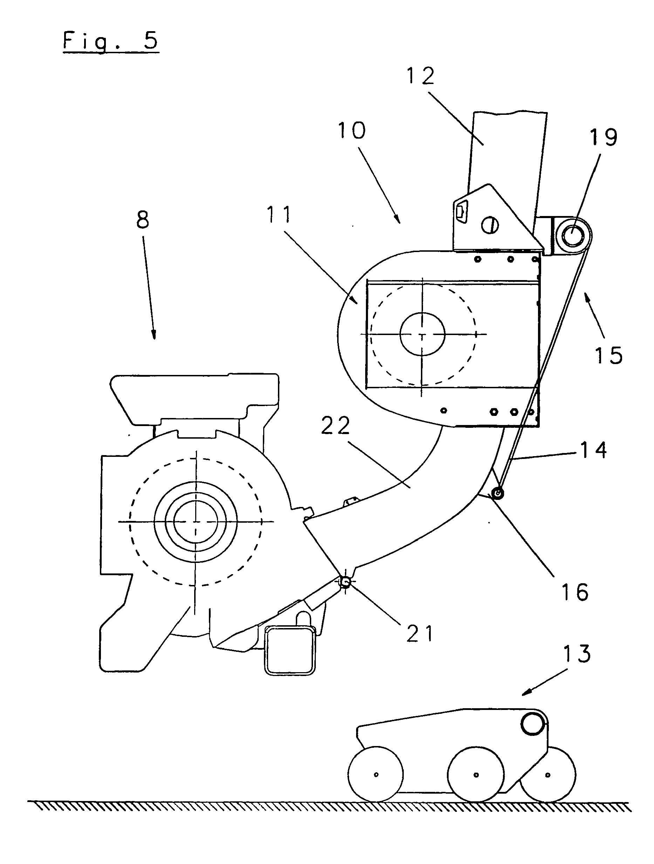

Fig. 2 zeigt die Situation zu Beginn des Einbaues bzw. am Ende des Ausbaues der Konditioniereinrichtung 9. Die Konditioniereinrichtung 9 ist in einer gegenüber ihrer Einbaulage auf ihrer Oberseite in einem rollbaren Hilfsgestell 13 abgelegten Position zu erkennen. Das Hilfsgestell 13 dient dabei als Transportgestell zur leichten Verbringung der Konditioniereinrichtung 9 in eine Position unterhalb des Feldhäckslers 1 und zu deren Fixierung. An der Konditioniereinrichtung 9 ist ein Zugmittel 14 einer Hebe- und Senkvorrichtung 15, welches in diesem Ausführungsbeispiel als Stahlseil ausgebildet ist durch Verbindung mit einem ersten Griffelement 16 befestigt. Das Zugmittel 14 ist von diesem ersten Griffelement 16 aus um die Konditioniereinrichtung 9 herum zu einem mit diesem ebenfalls im Eingriff stehenden zweiten Griffelement 17 geführt. Von dort aus verläuft das Zugmittel 14 senkrecht in Zugrichtung nach oben bis zu einer Umlenkvorrichtung 18, welche erfindungsgemäß dazu dient, die Kraftrichtung der Hebe- und Senkvorrichtung 15 für den ersten Montageschritt (Verfahrensschritt) bzw. letzten Demontageschritt vorteilhaft so umzulenken, das die Konditioniereinrichtung 9 durch Betätigung des Antriebes 19 der Hebe- und Senkvorrichtung direkt in die in Fig. 3 dargestellte Koppelposition verbracht wird. In dieser Position der Konditioniereinrichtung 9 kann der Bediener diese sehr einfach und ohne großen Kraftaufwand mit dem Häckselaggregat 8 durch beidseitig angebrachte Verbindungselemente 20 verbinden. Im verbundenen Zustand der Verbindungselemente 20 bilden diese eine Schwenkachse der Konditioniereinrichtung 9 zum Häckselaggregat 8 um die die Konditioniereinrichtung 9 jetzt im weiteren Montageablauf durch das Entspannen des Zugmittels 14 nach unten geschwenkt wird. Für den zweiten Montageschritt (Verfahrensschritt) wird jetzt das entspannte Zugmittel 14 aus seinem Eingriff in das zweite Griffelement 17 der Konditioniereinrichtung 9 gelöst. Außerdem wird die Umlenkvorrichtung 18 aus dem Verlauf des Zugmittels 14 entfernt, so dass die Kraftrichtung der Hebe- und Senkvorrichtung 15 direkt vom Antrieb 19 über das Zugmittel 14 auf die Konditioniereinrichtung 9 wirkt. Durch diese erfinderische Lösung in Verbindung mit der Entkopplung des Zugmittels 14 von dem zweiten Griffelement 17 wird jetzt durch die Betätigung der Hebe- und Senkvorrichtung 15 in Richtung Zug eine Schwenkbewegung der Konditioniereinrichtung 9 um die, durch die Verbindungselemente 20 gebildete Schwenkachse 21, in die in Fig. 4 dargestellte Einbaulage ermöglicht. Die weitere nicht näher dargestellte Verbindung der Konditioniereinrichtung 9 mit dem Auswurfschacht 10 durch Schrauben oder Schnellverbindungselemente und die Antriebsverbindung sind die abschließenden Arbeitsschritte des Einbaus der Konditioniereinrichtung 9. Der Einbau des glatten Kanalabschnittes 22 Fig. 5 entspricht dem gleichen zuvor beschriebenen Verfahren für die Konditioniereinrichtung 9. Das Demontageverfahren ist entsprechend umgekehrt.

Das beschriebene Verfahren zum Ein/Ausbau einer Konditioniereinrichtung 9 bzw. eines glatten Kanalabschnittes 22 in den Emtegutverlauf eines Feldhäckslers 1 ist gegenüber bisherigen Vorgehensweisen eine erhebliche Verbesserung, insbesondere im Bezug auf die Umbauzeit und die Arbeitssicherheit. Der gesamte Umbau kann von einer Person aus sicheren Arbeitspositionen ohne großen Kraftaufwand in kürzester Zeit ausgeführt werden.

## Patentansprüche

1. Verfahren zum Ein/Ausbau einer Konditioniereinrichtung (9) in eine landwirtschaftliche Emtemaschine, insbesondere einen selbstfahrenden Feldhäcksler (1) zum Aufnehmen und Häckseln von Mais, Anwelkgras, Grünfutter und dergleichen Erntegut mit einer, einer Häckseleinrichtung (6) nachgeordneten Konditioniereinrichtung (9), welche wahlweise in einen Förderkanal eingreift oder aus diesem entfernbar ist, wobei der Ein/Ausbau durch Einwirken einer Hebe- und Senkvorrichtung (15) auf ein Griffelement (16, 17) an der Konditioniereinrichtung (9) unterstützt wird, **dadurch gekennzeichnet, dass** in einem ersten Verfahrensschritt das Einwirken der Hebe- und Senkvorrichtung (15) auf ein zweites Griffelement (17) an der Konditioniervorrichtung (9) und durch die Umlenkung der Kraftrichtung der Hebe- und Senkvorrichtung (15) die Konditioniereinrichtung (9) eine zumindest annähernd senkrechte Bewegung ausführt und in einem zweiten Verfahrensschritt durch das direkte Einwirken der Hebe- und Senkvorrichtung (15) auf ein erstes Griffelement (16) der Konditioniervorrichtung (9), diese eine Schwenkbewegung ausführt.

2. Verfahren nach Anspruch 1, **dadurch gekennzeichnet, dass** die Konditioniereinrichtung (9) in einem ersten Verfahrensschritt mit der Häckseleinrichtung (6) schwenkbeweglich verbunden wird.

3. Verfahren nach einem oder mehreren der vorhergehenden Ansprüche, **dadurch gekennzeichnet, dass** die Konditioniereinrichtung (9) in einem zweiten Verfahrensschritt eine Schwenkbewegung um die Schwenkachse (21) der Verbindungselemente (20) ausführt.

4. Verfahren nach einem oder mehreren der vorhergehenden Ansprüche, **dadurch gekennzeichnet, dass** eine für den ersten Verfahrensschritt in den Kraftverlauf der Hebe- und Senkvorrichtung (15) angeordnete Umlenkvorrichtung (18) für den weiteren Montageverlauf aus dem Kraftverlauf entfernt wird.

5. Vorrichtung zum Ein/Ausbau einer Konditioniereinrichtung in eine landwirtschaftliche Emtemaschine, insbesondere einem selbstfahrenden Feldhäcksler (1) zum Aufnehmen und Häckseln von Mais, Anwelkgras, Grünfutter und dergleichen Erntegut mit einer einer Häckseleinrichtung (6) nachgeordneten Konditioniereinrichtung (9), welche wahlweise in einen Förderkanal eingreift oder aus diesem entfernbar ist, wobei der Ein/Ausbau durch Einwirken einer Hebe- und Senkvorrichtung (15) in ein Griffelement (16, 17) an der Konditioniereinrichtung (9) unterstützt wird, **dadurch gekennzeichnet, dass** durch die Anordnung und Verwendung von zwei Griffelementen (16, 17) an der Konditioniereinrichtung (9) durch die Hebe- und Senkvorrichtung sowohl eine vertikale als auch eine drehende Bewegung der Konditioniereinrichtung (9) ausgeführt wird.

6. Vorrichtung nach Anspruch 5, **dadurch gekennzeichnet, dass** die Konditioniereinrichtung (9) an ihrem unteren, als Kanal ausgebildeten Ende Verbindungselemente (20) aufweist, die gleichzeitig eine in etwa horizontale Schwenkachse (21) zwischen der Häckseleinrichtung (6) und der Konditioniereinrichtung (9) bilden.

7. Vorrichtung nach einem der Ansprüche 5 oder 6, **dadurch gekennzeichnet, dass** die Verbindungen der Häckseleinrichtung (6) mit der Konditioniereinrichtung (9) Verbindungselemente (20) aufweisen, die zur wahlweisen Aufnahme eines glatten Kanalabschnitts (22) ohne Bearbeitungselemente für das Erntegut statt der Konditioniereinrichtung (9) geeignet ausgebildet sind.

8. Vorrichtung nach einem oder mehreren der Ansprüche 5 bis 7, **dadurch gekennzeichnet, dass** an der Konditioniereinrichtung (9) und/oder dem glatten Kanalabschnitt (22) ein erstes Griffelement (16) derart angeordnet ist, dass beim Einhängen der Konditioniereinrichtung (9) und/oder des glatten Kanalabschnitts (22) in eine Hebe- und Senkvorrichtung (15) an dem ersten Griffelement (16) eine annähernd vertikale Lage der Konditioniereinrichtung (9) und/oder des glatten Kanalabschnitts (22), annähernd ihrer Einbaulage erreicht wird.

9. Vorrichtung nach einem oder mehreren der Ansprüche 5 bis 8, **dadurch gekennzeichnet, dass** an der Konditioniereinrichtung (9) und/oder dem glatten Kanalabschnitt nahe dem oberen Ende ein zweites Griffelement (17) derart angeordnet ist, dass beim Einhängen der Konditioniereinrichtung (9) und/oder des glatten Kanalabschnitts (22) in eine Hebe- und Senkvorrichtung (15) an dem zweiten Griffelement (17) eine annähernd vertikale Lage der Konditioniereinrichtung (9) und/oder des glatten Kanalabschnitts (22) annähernd entgegen ihrer Einbaulage erreicht wird.

10. Vorrichtung nach einem oder mehreren der Ansprüche 5 bis 9, **dadurch gekennzeichnet, dass** die Griffelemente (16, 17) derart ausgebildet sind, dass die Hebe- und Senkvorrichtung (15) gleichzeitig auf beide Griffelemente (16, 17) einwirken kann, wobei das zweite Griffelement (17) dabei als Kraftumlenkpunkt wirksam wird.

11. Vorrichtung nach einem oder mehreren der Ansprüche 5 bis 10, **dadurch gekennzeichnet, dass** durch eine werkzeuglos einsetzbare Umlenkvorrichtung (18) die Lage des Zugpunktes und die Richtung der Zugkraft der Hebe- und Senkvorrichtung (15) veränderbar ist.

12. Vorrichtung nach einem oder mehreren der Ansprüche 5 bis 11, **gekennzeichnet durch** ein rollbares Hilfsgestell (13) als Zubehör, das zur Aufnahme und zum Transport der Konditioniereinrichtung (9) und/oder des glatten Kanalabschnitts (22) im ausgebauten Zustand ausgebildet ist.

## Claims

1. Method of mounting/removing a conditioning device (9) in an agricultural harvesting machine and in particular a self-propelled forage harvester (1) for picking up and chopping maize, wilted grass, green forage and the like harvested crops, having a conditioning device (9) positioned downstream of a chopping device (6), which conditioning device (9) engages in a conveyor passage or is removable therefrom, as desired, the mounting/removal being assisted by the action of a raising and lowering arrangement (15) on a member for gripping (16, 17) on the conditioning device (9), **characterised in that**, in a first step of the method, the action of the raising and lowering arrangement (15) is performed on a second member for gripping (17) on the conditioning device (9) and, as a result of the change in the direction of the force from the raising and lowering arrangement (15), the conditioning device (9) performs an at least approximately vertical movement and, in a second step of the method, the conditioning device (9) performs a pivoting movement as a result of the direct action of the raising and lowering arrangement (15) on a first member for gripping (16) on the conditioning device (9).

2. Method according to claim 1, **characterised in that**, in a first step of the method, the conditioning device (9) is connected to the chopping device (6) to be movable by pivoting.

3. Method according to one or more of the foregoing claims, **characterised in that**, in a second step of the method, the conditioning device (9) performs a pivoting movement about the axis of pivot (21) of the connecting elements (20).

4. Method according to one or more of the foregoing claims, **characterised in that** a direction-changing device (18) which, for the first step of the method, is arranged in the path followed by the force from the raising and lowering arrangement (15) is removed from the path followed by the force for the remainder of the installation procedure.

5. Arrangement for mounting/removing a conditioning device in an agricultural harvesting machine and in particular a self-propelled forage harvester (1) for picking up and chopping maize, wilted grass, green forage and the like harvested crops, having a conditioning device (9) positioned downstream of a chopping device (6), which conditioning device (9) engages in a conveyor passage or is removable therefrom, as desired, the mounting/removal being assisted by the action of a raising and lowering arrangement (15) on a member for gripping (16, 17) on the conditioning device (9), **characterised in that**, as a result of the arrangement and use of two members for gripping (16, 17) on the conditioning device (9) by the raising and lowering arrangement, both a vertical and also a rotary movement of the conditioning device (9) is performed.

6. Arrangement according to claim 5, **characterised in that** the conditioning device (9) has, at its bottom end, which is in form of a passage, connecting elements (20) which at the same time create an approximately horizontal axis of pivot (21) between the chopping device (6) and the conditioning device (9).

7. Arrangement according to either of claims 5 and 6, **characterised in that** the connections of the chopping device (6) to the conditioning device (9) have connecting elements (20) which are formed to be suitable for receiving, if desired, a smooth portion (22) of passage having no processing members for the harvested crop in place of the conditioning device (9).

8. Arrangement according to one or more of claims 5 to 7, **characterised in that** a first member for gripping (16) is arranged on the conditioning device and/or the smooth portion (22) of passage in such a way that, when the conditioning device (9) and/or the smooth portion (22) of passage are hooked onto a raising and lowering arrangement (15) at the first member for gripping (16), an approximately vertical position is obtained for the conditioning device (9) and/or the smooth portion (22) of passage, approximating to their installed position.

9. Arrangement according to one or more of claims 5 to 8, **characterised in that** a second gripping element (17) is arranged on the conditioning device (9) and/or the smooth portion of passage, close to their upper end, in such a way that, when the conditioning device (9) and/or the smooth portion (22) of passage are hooked onto a raising and lowering arrangement (15) at the second member for gripping (17), an approximately vertical position is obtained for the conditioning device (9) and/or the smooth portion (22) of passage, which is approximately opposite to their installed position.

10. Arrangement according to one or more of claims 5 to 9, **characterised in that** the elements for gripping (16, 17) are so formed that the raising and lowering arrangement can act simultaneously on both members for gripping (16, 17), the second element for gripping (17) then acting as a point at which the direction of force is changed.

11. Arrangement according to one or more of claims 5 to 10, **characterised in that** the position of the point of traction of the raising and lowering arrangement (15) and the direction of the tractive force therefrom can be changed by means of a direction-changing device (18) which can be fitted without tools.

12. Arrangement according to one or more of claims 5 to 11, **characterised by** a rollable auxiliary support (13) forming an accessory which is designed for receiving and transporting the conditioning device (9) and/or the smooth portion (22) of passage in the removed state.

## Revendications

1. Procédé de montage / démontage d'une installation de conditionnement (9) dans une machine agricole de récolte, notamment une ensileuse automotrice (1), pour prendre et hacher du maïs, de l'herbe fanée, du fourrage ou produits de récolte analogues, comportant une installation de conditionnement (9) en aval d'une hacheuse (6), et qui peut être installée au choix de manière à coopérer avec un canal de transfert ou en être dégagé, et dont le montage/démontage est assisté par l'action d'un dispositif de levage (15) agissant sur un élément de prise (16, 17) de l'installation de conditionnement (9),
**caractérisé en ce que**
dans une première étape de procédé, on fait agir le dispositif de levage (15) sur un second élément de prise (17) du dispositif de conditionnement (9) et en déviant la direction de la force du dispositif de levage (15) on déplace l'installation de conditionnement (9) au moins sensiblement suivant un mouvement vertical, et
dans une seconde étape du procédé, par l'action directe du dispositif de levage (15) sur un premier élément de prise (16) du dispositif de conditionnement (9), on lui fait exécuter un mouvement de basculement.

2. Procédé selon la revendication 1,
**caractérisé en ce que**
dans une première étape de procédé, l'installation de conditionnement (9) est reliée à la hacheuse (6) de manière mobile en pivotement.

3. Procédé selon l'une ou plusieurs des revendications précédentes,
**caractérisé en ce que**
dans une seconde étape de procédé, l'installation de conditionnement (9) effectue un mouvement de basculement autour de l'axe de basculement (21) des éléments de liaison (20).

4. Procédé selon l'une ou plusieurs des revendications précédentes,
**caractérisé en ce qu'**
on enlève un dispositif de déviation (18) installé pour effectuer la première étape du procédé dans la ligne de force du dispositif de levage (15) pour la suite du montage pour dégager la ligne de force.

5. Dispositif de montage/démontage d'une installation de conditionnement dans une machine agricole de récolte, notamment une ensileuse automotrice (1) pour prendre et hacher du maïs, du foin, du fourrage ou produits de récolte analogues, comportant une installation de conditionnement (9) en aval d'une hacheuse (6) et qui au choix coopère avec un canal de transfert ou en est dégagée, et dont le montage/démontage est assisté par un dispositif de levage (15) agissant sur un élément de prise (16, 17) de l'installation de conditionnement (9),
**caractérisé en ce que**
par le montage et l'utilisation de deux éléments de prise (16, 17) dans l'installation de conditionnement (9), le dispositif de levage effectue à la fois un mouvement vertical et un mouvement de rotation de l'installation de conditionnement (9).

6. Dispositif selon la revendication 5,
**caractérisé en ce que**
l'installation de conditionnement (9) comporte des éléments de liaison (20) à son extrémité inférieure en forme de canal, ces éléments formant en même temps un axe de basculement sensiblement horizontal (21) entre la hacheuse (6) et l'installation de conditionnement (9).

7. Dispositif selon l'une des revendications 5 ou 6,
**caractérisé en ce que**
les liaisons entre la hacheuse (6) et l'installation de conditionnement (9) comportent des éléments de liaison (20) réalisés pour recevoir sélectivement un segment de canal lisse (22) sans élément pour travailler le produit de récolte à la place de l'installation de conditionnement (9).

8. Dispositif selon l'une ou plusieurs des revendications 5 à 7,
**caractérisé par**
un premier élément de prise (16) installé sur l'installation de conditionnement (9) et/ou le segment de canal lisse (22) de façon que lorsqu'on accroche l'installation de conditionnement (9) et/ou le segment de canal lisse (22) dans un dispositif de levage (15) au niveau du premier élément de prise (16), on obtient une position sensiblement verticale de l'installation de conditionnement (9) et/ou du segment de canal lisse (22), proche de sa position de montage.

9. Dispositif selon l'une ou plusieurs des revendications 5 à 8,
**caractérisé en ce que**
l'installation de conditionnement (9) et/ou le segment de canal lisse comportent à proximité de l'extrémité supérieure, un second élément de prise (17) de façon qu'en accrochant l'installation de conditionnement (9) et/ou le segment de canal lisse (22) dans le dispositif de levage (15) au niveau du second élément de prise (17), on aura une position pratiquement verticale de l'installation de conditionnement (9) et/ou du segment de canal lisse (22) proche de sa position de montage.

10. Dispositif selon l'une ou plusieurs des revendications 5 à 9,
**caractérisé en ce que**
les éléments de prise (16, 17) sont réalisés pour que le dispositif de levage (15) puisse agir en même temps sur les deux éléments de prise (16, 17) et le second élément de prise (17) fonctionne comme point d'application de la force.

11. Dispositif selon l'une ou plusieurs des revendications 5 à 10,
**caractérisé par**
un dispositif de déviation (18) utilisable sans mise en oeuvre d'outil, pour modifier la position du point de traction et la direction de la force de traction du dispositif de levage (15).

12. Dispositif selon l'une ou plusieurs des revendications 5 à 11,
**caractérisé par**
un châssis roulant (13) comme accessoire servant à recevoir et à transporter l'installation de conditionnement (9) et/ou le segment de canal lisse (22) à l'état démonté.
